# EUROPÄISCHE PATENTSCHRIFT

(11) **EP 0 501 162 B1**
(45) Veröffentlichungstag und Bekanntmachung des Hinweises auf die Patenterteilung: **27.03.1996**
(21) Anmeldenummer: 92101516.0
(22) Anmeldetag: 30.01.1992
(51) Int. Cl.: C08L 71/12, C08L 25/00, C08L 27/12, C08K 3/32, C08K 5/44, C08K 5/3492, C08L 25/02, C08L 25/06, C08L 51/04

(54) **Flammgeschützte thermoplastische Formmassen**
Flame resistant thermoplastic moulding compositions
Masse de moulage thermoplastique ignifugé

(30) Priorität: 26.02.1991 DE 4105925
(43) Veröffentlichungstag der Anmeldung: 02.09.1992
(73) Patentinhaber: BASF Aktiengesellschaft, D-67063 Ludwigshafen (DE)
(72) Erfinder: Zeltner, Doris, Dr., W-6725 Roemerberg (DE); Feldmann, Heike, Dr., W-6800 Mannheim 1 (DE); Ostermayer, Bertram, Dr., W-6900 Heidelberg (DE); McKee, Graham Edmund, Dr., W-6940 Weinheim (DE)

(56) Entgegenhaltungen:
- EP-A- 0 311 909

## Beschreibung

Die Erfindung betrifft flammgeschützte thermoplastische Formmassen, enthaltend
A) 5 bis 94 Gew.-% eines Polyphenylenethers
B) 5 bis 94 Gew.-% eines vinylaromatischen Polymeren
C) 1 bis 30 Gew.-% eines Flammschutzmittels und
D) 0 bis 60 Gew.-% sonstiger Zusatzstoffe in wirksamen Mengen,
dadurch gekennzeichnet, daß die Komponente C) aus einer Mischung aus
C1) mindestens einer phosphorhaltigen Verbindung,
C2) Melamin, Melamincyanurat, Melaminoxalat, Melaminborat, Melaminstearat oder deren Mischungen
C3) Polytetrafluorethylen mit einem Fluorgehalt zwischen 65 und 76 Gew.-%
aufgebaut ist.

Weiterhin betrifft die Erfindung ein Verfahren zur Herstellung dieser Formmassen.

Außerdem betrifft die Erfindung die Verwendung dieser Formmassen zur Herstellung von Fasern, Folien und Formkörpern sowie die aus den erfindungsgemäßen Formmassen erhältlichen Formkörper.

Aus der EP-A 311 909 sind Polyphenylether/Polystyrol bzw. HIPS Mischungen bekannt, welche eine Mischung aus phosphorhaltigen Verbindungen und einem Triazinderivat als Flammschutzkombination enthalten. Der Zusatz des Triazinderivates beeinträchtigt jedoch die mechanischen Eigenschaften, insbesondere die multiaxiale Zähigkeit der Formkörper erheblich.

Aus den DE-A 27 56 458, DE-A 25 54 324 und EP-A 178 280 sind flammhemmende Zusätze für PPE/HIPS bzw. Polystyrol bekannt, welche Polytetrafluorethylene in Kombination mit phosphorhaltigen Verbindungen enthalten.

Der Zusatz des Polytetrafluorethylens vermindert die Farbqualität der Formköper (Gelbfärbung) und verschlechtert durch Zunahme der Brandzeiten die flammhemmende Wirkung der Flammschutzkombination.

Der vorliegenden Erfindung lag daher die Aufgabe zugrunde, thermoplastische Formmassen auf der Basis von Polyphenylenethern und vinylaromatischen Polymeren zur Verfügung zu stellen, die gute mechanische Eigenschaften (insbesondere eine gute multiaxiale Schlagzähigkeit) bei gleichzeitig guten Flammschutzeigenschaften und heller Eigenfarbe aufweisen.

Demgemäß wurden die eingangs definierten flammgeschützten thermoplastischen Formmassen gefunden. Bevorzugte Massen dieser Art sind den Unteransprüchen zu entnehmen.

Weiterhin wurden Verfahren zur Herstellung dieser thermoplastischen Formmassen, deren Verwendung zur Herstellung von Fasern, Folien und Formkörpern sowie die hierbei erhältlichen Formkörper gefunden.

Die in den erfindungsgemäßen Formmassen enthaltenen Polyphenylenether A) sind an sich bekannt. Die Polyphenylenether A) sind in den erfindungsgemäßen Formmassen in Mengen von 5 bis 94, bevorzugt 10 bis 89 und insbesondere 15 bis 60 Gew.-% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2-chlor-1,4-phenylenether), poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,2 bis 0,7 dl/g, gemessen in Choroform bei 30°C, aufweisen.

Die Komponente B) ist in den erfindungsgemäßen Formmassen in Mengen von 5 bis 94, bevorzugt 10 bis 89 und insbesondere 38 bis 83 Gew.-% enthalten, bezogen auf das Gesamtgewicht der Komponenten A) bis C) sowie gegebenenfalls D).

Die Komponente B) ist ein vinylaromatisches Polymer, das vorzugsweise mit dem eingesetzten Polyphenylenether verträglich ist.

Das Molekulargewicht dieser Polymeren liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980).

Die Homopolymerisate können Gewichtsmittel des Molekulargewichts M_{W} bis zu 300 000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes (M_{W}) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 bis 34 (1963), unter -20°C besitzen.

Es können auch Mischungen von schlagfest modifizierten und nichtmodifizierten vinylaromatischen Polymeren eingesetzt werden, wobei das Mischungsverhältnis beliebig ist.

Als Komponente C) enthalten die erfindungsgemäßen Formmassen eine Mischung aufgebaut aus
C1) mindestens einer phosphorhaltigen Verbindung,
C2) Melamin, Melamincyanurat, Melaminoxalat, Melaminborat, Melaminstearat oder deren Mischungen
C3) Polytetrafluorethylen mit einem Fluorgehalt zwischen 65 und 76 Gew.-%.

Die Zusammensetzung der Komponente C) beträgt im allgemeinen (bezogen auf den Gehalt der gesamten Komponente C) in den Formmassen)
C1) 50 bis 99,67, bevorzugt 70 bis 96,7 und insbesondere 70 bis 94,9 Gew.-%
C2) 0,3 bis 48, bevorzugt 3 bis 30 und insbesondere 5 bis 20 Gew.-%
C3) 0,03 bis 2, bevorzugt 0,1 bis 1 und insbesondere 0,1 bis 0,5 Gew.-%.

Der Gehalt der Komponente C) in den erfindungsgemäßen Formmassen beträgt 1 bis 30, vorzugsweise 1 bis 20 und insbesondere 2 bis 15 Gew.-% bezogen auf das Gesamtgewicht der Komponenten A bis C) und gegebenenfalls D).

Bei der Komponente C1) handelt es sich um organische und anorganische Phosphor enthaltende Verbindungen, in denen der Phosphor die Vlertigkeitsstufe -3 bis +5 besitzt. Unter der Wertigkeitsstufe soll der Begriff "Oxidationsstufe" verstanden werden, wie er im Lehrbuch der Anorganschen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid. Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkylund arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7.000, vorzugsweise im Bereich von 700 bis 2.000 liegen.

Der Phosphor besitzt hierbei die Oxidationsstufe -1.

Ferner können anorganische Koordinationspolymere von Aryl(Alkyl)-phosphinsäuren wie z.B. Poly[natrium(I)-methylphenylphosphinat] eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) sowie Mobil Antiblaze 19, wobei diese Verbindungen allein oder in beliebigen Mischungsverhältnissen zugesetzt werden können.

Die gemäß der Erfindung verwendeten Triazinderivate (Komponente C2) sind im allgemeinen Melamin sowie dessen Reaktionsprodukte mit organischen oder anorganischen Säuren.

Bevorzugt sind Melamin (Formel I) und Melamincyanurat, wobei letzteres ein Reaktionsprodukt aus vorzugsweise äquimolaren Mengen von Melamin und Cyanursäure bzw. Isocyanursäure (Formeln IIa und IIb) ist.

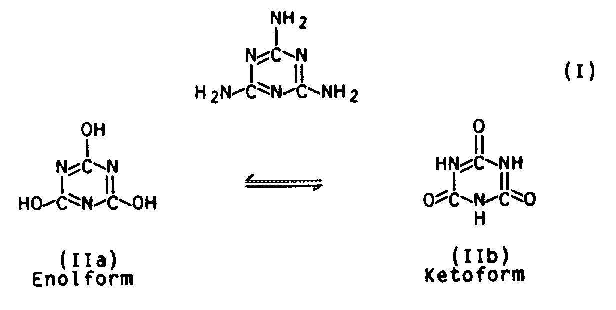

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße d₅₀ von 69 µm.

Darüber hinaus sind Melaminoxalat, Melaminborat oder Melaminstearat als Komponente C2) geeignet.

Es können auch Mischungen der o.g. Triazinderivate eingesetzt werden, wobei das Mischungsverhältnis beliebig ist.

Als Komponente C3) enthält die erfindungsgemäße Flammschutzkombination Polytetrafluorethylen, welches als Pulver oder als wäßrige Dispersion eingesetzt werden kann.

Bevorzugt sind wäßrige Dispersionen, deren Feststoffgehalt im allgemeinen 5 bis 80 Gew.-% beträgt und übliche oberflächenaktive Hilfsmittel (Dispergiermittel) wie Fluortenside, Alkylsulfonate, Glycerinester, Polyglykole oder Salze von Fettsäuren z.B. Calciumstearat, enthalten.

Das pulverförmige Polytetrafluorethylen kann üblicherweise mittels Suspensions- oder Emulsionspolymerisation und nach bekanntem Koagulationsverfahren (z.B. Gefrierkoakulation) oder anderen Trocknungsverfahren (z.B. Sprühtrocknung) hergestellt werden.

Die PTFE-Polymere sind Polymere mit einem Fluorgehalt zwischen 65 und 76 Gew.-%, bevorzugt zwischen 70 und 76 Gew.-%. Neben Homopolymerisaten des Tetrafluorethylens kommen hierfür auch Copolymere des Tetrafluorethylens mit anderen fluorhaltigen Monomeren wie z.B. Hexafluorpropen, oder Copolymere des Tetrafluorethylens mit geringen Mengen fluorfreier copolymerisierbarer ethylenisch ungesättigter Monomerer in Betracht. Die Herstellung von Tetrafluorethylenpolymerisaten ist bekannt und z.B. in Houben-Weyl, Methoden der organischen Chemie, Band 14/1, Seiten 842-849, Stuttgart 1961, beschrieben.

Bevorzugte Kombinationen (1) bis (3) sind Mischungen aus Triphenylphosphat gegebenenfalls mit Triphenylphosphinoxid mit Melamin sowie Polytetrafluorethylen.

Als Komponente D) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 60, insbesondere nicht mehr als 50 und ganz besonders nicht mehr als 30 Gew.%, bezogen auf das Gesamtgewicht der Komponente A) bis D).

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Zusatzstoffe seien Schlagzähmodifier genannt, die in Mengen bis zu 20 Gew.-%, bevorzugt bis zu 15 Gew.-% enthalten sein können und welche verschieden von der Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in Betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau M¹M-, M¹MM¹M- oder M¹MM¹-, wobei diese Blockpolymerisate auch statistische Segmente enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Pigmente kommen z.B. in Frage TiO₂ und Ruße.

Bei Verwendung von TiO₂ liegt die mittlere Teilchengröße im Bereich von 50 bis 400 nm, insbesondere 150 bis 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Über Art und Menge dieser Zusatzstoffe lassen sich die gewünschten Eigenschaften der Endprodukte in weitem Maße steuern.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Die Verweilzeiten betragen im allgemeinen 0,5 bis 30 min, vorzugsweise 1 bis 5 min.

Die Herstellung der erfindungsgemäßen thermoplastischen Formmassen ist an sich nicht kritisch, jedoch haben sich einige Verfahren als besonders geeignet erwiesen.

So kann beispielsweise aus dem Komponenten A) und/oder B) mit C1) und C2) sowie gegebenenfalls D) ein Granulat hergestellt werden. Auf dieses Granulat kann nun die Komponente C3) als wäßrige Dispersion aufgetragen werden, wobei in einer bevorzugten Ausführungsform die Temperatur des Granulates von 0 bis 130°C, bevorzugt 10 bis 100°C und insbesondere 15 bis 30°C beträgt. Geeignete Vorrichtungen sind z.B. Fallmischer, Fluidmischer, Trommel- oder Ringmischer. Für weitere Einzelheiten sei hier auf Vauck, Müller, Grundoperationen chemischer Verfahrenstechnik, 5. Aufl. VEB Deutscher Verlag für Grundstoffindustrie, Leipzig 1978 verwiesen.

In einem weiteren bevorzugten Verfahren zur Herstellung der erfindungsgemäßen thermoplastischen Formmassen wird die Komponente C3) als wäßrige Dispersion mittels einer 2. Zudosiereinrichtung (z.B. Flüssigkeitspumpen) in die Schmelze der Komponenten A), B), C1) und C2) sowie gegebenenfalls D) zugegeben.

Die erfindungsgemäßen Formmassen eignen sich gut zur Herstellung von Formteilen aller Art, z.B. durch Spritzguß oder Extrusion. Weiterhin eignen sie sich insbesondere zur Herstellung von Folien und Halbzeugen im Tiefzieh- und Blasverfahren.

Die Formkörper weisen bei einer guten Fließfähigkeit und multiaxialer Schlagzähigkeit eine helle Eigenfarbe und gute Flammschutzeigenschaften, insbesondere kurze Brandzeiten, auf.

Infolge dieses Eigenschaftsspektrums eignen sich diese Formkörper besonders für Anwendungen im Elektrosektor und als Gehäuseteile.

### Beispiele

### Komponente A)

Poly(2,6-dimethyl-1,4-phenylenether) mit einer Grenzviskosität von 0,5 dl/g (gemessen in CHCl₃ bei 25°C, 1 gew.-%ige Lösung).

### Komponente B

B1) Schlagfestes Polystyrol (HIPS) mit einem Polybutadiengehalt von 13 Gew.-% und einer mittleren Teilchengröße der Weichkomponente von 2 bis 3 µm.
B2) Schlagfestes Polystyrol (HIPS) mit einem Polybutadiengehalt von 9 Gew.-% und einer mittleren Teilchengröße der Weichkomponente von 0,6 µm

### Komponente C

C1a) Triphenylphosphinoxid
C1b) Triphenylphosphinoxid und Triphenylphosphat im Mischungsverhältnis von 1 : 1
C2) Melamin
C3) Polytetrafluorethylen (Teflon® 30-N PTFE, Firma Dupont) als Dispersion: 60 Gew.-% Polytetrafluorethylen, 1 Gew.-% Ammoniumperfluorooctanoat 39 Gew.-% Wasser

### Komponente D)

D1) Styrol-Butadien-Styrol Dreiblockcopolymer mit einer Brookfield Viskosität von 4000 (Cariflex® TR 1101, Firma Shell AG)
D2) Styrol-hydriertes Polybutadien-Styrol-Dreiblockcopolymer mit einer Brookfield Viskosität von 1500 (Kraton® G 1650, Firma Shell AG)

### Herstellung der Formmassen

Die Komponenten A), B), C1) und C2) wurden auf einen Zweischneckenextruder bei einer Zylindertemperatur von 280°C gemischt. Die Komponente C3) wurde in Form einer 60%igen wäßrigen Dispersion in einer weiteren Zone des Extruders zur Schmelze der Komponenten A), B), C1) und C2) zugegeben. Der Schmelzestrang wurde durch ein Wasserbad geführt und granuliert. Das getrocknete Granulat wurde bei 280°C zu Rundscheiben (60 x 2 mm) und bei 280°C zu Normkleinstäben gespritzt.

Der Brandtest erfolgte nach UL 94 an 1,6 mm Teststäbchen. Die Nachbrennzeit entsprach dabei der Summe aus je 2 Beflammungen von 5 Brandstäben.

Der Meltvolumeindex (MVI) wurde bei 220°C und 10 kg Belastung nach DIN 53 735 bestimmt.

Die Farbqualität wurde an 60-mm-Rundscheiben durch Remissionsmessung (DIN 6164) und die multiaxiale Zähigkeit (Durchstoßarbeit W_{ges}) wurde nach DIN 53 443 bestimmt.

Die Zusammensetzung der Formmassen und die Ergebnisse der Messungen sind den Tabellen zu entnehmen.

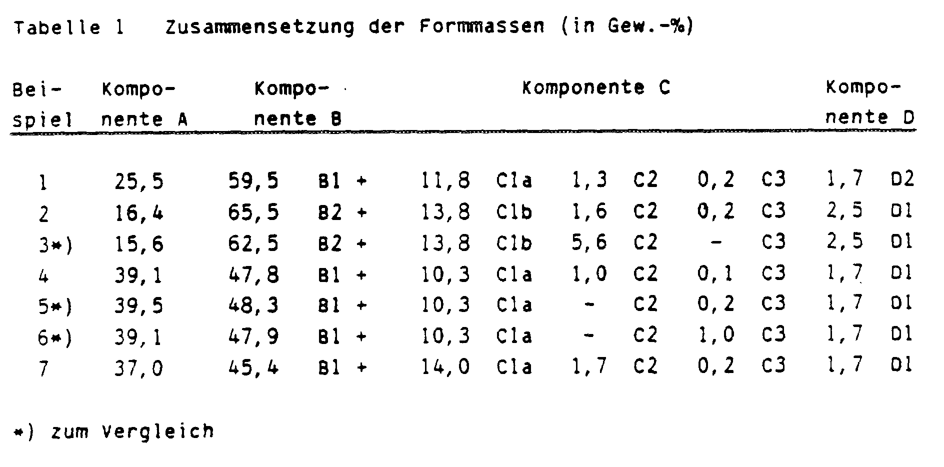

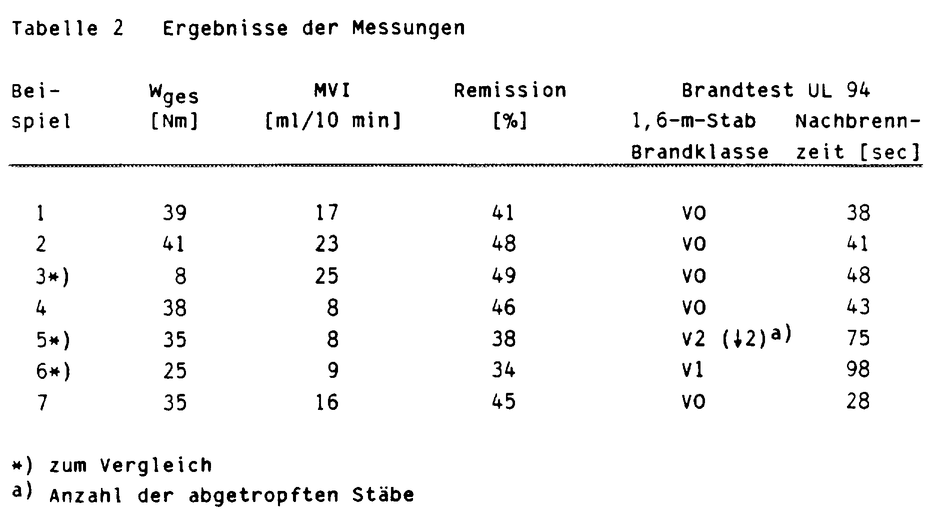

## Patentansprüche

1. Flammgeschützte thermoplastische Formmassen, enthaltend
A) 5 bis 94 Gew.-% eines Polyphenylenethers
B) 5 bis 94 Gew.-% eines vinylaromatischen Polymeren
C) 1 bis 30 Gew.-% eines Flammschutzmittels und
D) 0 bis 60 Gew.-% sonstiger Zusatzstoffe in wirksamen Mengen,
dadurch gekennzeichnet, daß die Komponente C) aus einer Mischung aus
C1) mindestens einer phosphorhaltigen Verbindung,
C2) Melamin, Melamincyanurat, Melaminoxalat, Melaminborat, Melaminstearat oder deren Mischungen
C3) Polytetrafluorethylen mit einem Fluorgehalt zwischen 65 und 76 Gew.-%
aufgebaut ist.

2. Flammgeschützte thermoplastische Formmassen nach Anspruch 1, enthaltend
10 bis 89 Gew.-% der Komponente A)
10 bis 89 Gew.-% der Komponente B)
1 bis 20 Gew.-% der Komponente C).

3. Flammgeschützte thermoplastische Formmassen nach den Ansprüchen 1 und 2, enthaltend
5 bis 93 Gew.-% A)
5 bis 93 Gew.-% B)
1 bis 30 Gew.-% C)
1 bis 50 Gew.-% eines faser- oder teilchenförmigen Füllstoffes oder deren Mischungen als Komponente D).

4. Flammgeschützte thermoplastische Formmassen nach den Ansprüchen 1 bis 3, in denen die Komponente C aus
50 bis 99,67 Gew.-% C1)
0,3 bis 48 Gew.-% C2) und
0,03 bis 2 Gew.-% C3)
aufgebaut ist, wobei sich die Gewichtsangaben auf den Gesamtgehalt der Komponente C) beziehen.

5. Flammgeschützte thermoplastische Formmassen nach den Ansprüchen 1 bis 4, in denen die Komponente C2 aus Melamin oder Melamincyanurat oder deren Mischungen aufgebaut ist.

6. Verfahren zur Herstellung der flammgeschützten thermoplastischen Formmassen gemäß den Ansprüchen 1 bis 5, dadurch gekennzeichnet, daß man die Komponente C3) in Form einer wäßrigen Dispersion auf ein Granulat der Komponente A) oder B) mit C1) und C2) oder der Komponenten A) und B) mit C1) und C2) bei einer Temperatur von 0 bis 130°C aufträgt.

7. Verfahren zur Herstellung der flammgeschützten thermoplastischen Formmassen gemäß den Ansprüchen 1 bis 5, dadurch gekennzeichnet, daß die Komponente C3 in Form einer wäßrigen Dispersion der Schmelze der Komponenten A, B, C1 und C2 sowie gegebenenfalls D) zugegeben wird.

8. Verwendung der flammgeschützten thermoplastischen Formmassen gemäß den Ansprüchen 1 bis 7 zur Herstellung von Formkörpern, Fasern und Folien.

9. Formkörper erhältlich aus den flammgeschützten thermoplastischen Formmassen gemäß den Ansprüchen 1 bis 7.

## Claims

1. A flame-resistant thermoplastic molding composition comprising
A) from 5 to 94% by weight of a polyphenylene ether
B) from 5 to 94% by weight of a vinylaromatic polymer
C) from 1 to 30% by weight of a flame retardant and
D) from 0 to 60% by weight of other additives in effective amounts,
wherein the component C) is made up of a mixture of
C1) at least one phosphorus-containing compound,
C2) melamine, melamine cyanurate, melamine oxalate, melamine borate, melamine stearate or mixtures thereof
C3) polytetrafluoroethylene having a fluorine content from 65 to 76% by weight.

2. A flame-resistant thermoplastic molding composition as claimed in claim 1, comprising
from 10 to 89% by weight of the component A)
from 10 to 89% by weight of the component B)
from 1 to 20% by weight of the component C).

3. A flame-resistant thermoplastic molding composition as claimed in claim 1 or 2, comprising
from 5 to 93% by weight of A)
from 5 to 93% by weight of B)
from 1 to 30% by weight of C)
from 1 to 50% by weight of a fibrous or particulate filler or a mixture thereof as component D).

4. A flame-resistant thermoplastic molding composition as claimed in any of claims 1 to 3, in which the component C is made up of
from 50 to 99.67% by weight of C1)
from 0.3 to 48% by weight of C2) and
from 0.03 to 2% by weight of C3),
where the percentages by weight are based on the total content of the component C).

5. A flame-resistant thermoplastic molding composition as claimed in any of claims 1 to 4, in which the component C2 is made up of melamine or melamine cyanurate or a mixture thereof.

6. A process for preparing the flame-resistant thermoplastic molding composition as claimed in any of claims 1 to 5, which comprises applying the component C3) in the form of an aqueous dispersion to a granulated material of the component A) or B) with C1) and C2) or of the components A) and B) with C1) and C2) at from 0 to 130°C.

7. A process for preparing the flame-resistant thermoplastic molding composition as claimed in any of claims 1 to 5, wherein the component C3 is added in the form of an aqueous dispersion to the melt of the components A, B, C1 and C2 and, if desired, D).

8. Use of the flame-resistant thermoplastic molding composition as claimed in any of claims 1 to 7 for producing moldings, fibers and films.

9. A molding obtainable from the flame-resistant thermoplastic molding composition as claimed in any of claims 1 to 7.

## Revendications

1. Masses à mouler thermoplastiques ignifugées, contenant
A) 5 à 94% en poids d'un polyoxyphénylène,
B) 5 à 94% en poids d'un polymère vinylaromatique,
C) 1 à 30% en poids d'un agent retardant les flammes et
D) 0 à 60% en poids d'autres additifs en quantités efficaces,
caractérisées en ce que le composant C) est constitué par un mélange
C1) d'au moins un composé phosphoré,
C2) de mélanine, de cyanurate de mélamine, d'oxalate de mélamine, de borate de mélamine, de stéarate de mélamine ou de mélanges de ceux-ci, et
C3) de polytétrafluoréthylène ayant une teneur en fluor comprise entre 65 et 76% en poids.

2. Masses à mouler thermoplastiques ignifugées selon la revendication 1, contenant
10 à 89% en poids du composant A),
10 à 89% en poids du composant B),
1 à 20% en poids du composant C),

3. Masses à mouler thermoplastiques ignifugées selon la revendication 1 ou 2, contenant
5 à 93% en poids de A),
5 à 93% en poids de B),
1 à 30% en poids de C),
1 à 50% en poids d'une charge fibreuse, d'une charge particulaire ou de mélanges de celles-ci en tant que composant D).

4. Masses à mouler thermoplastiques ignifugées selon l'une quelconque des revendications 1 à 3, dans lesquelles le composant C) est constitué par
50 à 99,67% en poids de C1),
0,3 à 48% en poids de C2) et
0,03 à 2% en poids de C3),
les pourcentages en poids se rapportant à la teneur totale du composant C).

5. Masses à mouler thermoplastiques ignifugées selon l'une quelconque des revendications 1 à 4, dans lesquelles le composant C2) se compose de mélamine, de cyanurate de mélamine ou de mélanges de ceux-ci.

6. Procédé de préparation des masses à mouler thermoplastiques ignifugées selon l'une quelconque des revendications 1 à 5, caractérisé en ce que l'on applique le composant C3), sous forme d'une dispersion aqueuse, sur un granulé du composant A) ou B) avec C1) et C2) ou des composants A) et B) avec C1) et C2), à une température de 0 à 130°C.

7. Procédé de préparation des masses à mouler thermoplastiques ignifugées selon l'une quelconque des revendications 1 à 5, caractérisé en ce que le composant C3) est ajouté, sous forme d'une dispersion aqueuse, à la masse fondue des composants A), B), C1) et C2) ainsi éventuellement que D).

8. Utilisation des masses à mouler thermoplastiques ignifugées selon l'une quelconque des revendications 1 à 7 pour la fabrication de corps moulés, de fibres et de feuilles.

9. Corps moulés, obtenus à partir des masses à mouler thermoplastiques ignifugées selon l'une quelconque des revendications 1 à 7.
